(19) Europäisches Patentamt
European Patent Office
Office européen des brevets

(11) EP 2 546 296 A1

(12) **EUROPEAN PATENT APPLICATION**
published in accordance with Art. 153(4) EPC

(43) Date of publication:
16.01.2013 Bulletin 2013/03

(51) Int Cl.:
C08K 3/26 (2006.01)   C01F 7/00 (2006.01)
C01G 9/00 (2006.01)   C08K 3/22 (2006.01)
C08K 9/00 (2006.01)   C08L 23/00 (2006.01)
C08L 27/06 (2006.01)   C08L 101/00 (2006.01)

(21) Application number: 11753149.1

(22) Date of filing: 16.02.2011

(86) International application number:
PCT/JP2011/053239

(87) International publication number:
WO 2011/111487 (15.09.2011 Gazette 2011/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 09.03.2010 JP 2010051372

(71) Applicant: Kyowa Chemical Industry Co., Ltd
Takamatsu-shi, Kagawa 761-0113 (JP)

(72) Inventors:
• IWAMOTO, Yoshihito
Sakaide-shi
Kagawa 762-0012 (JP)
• KOBASHI, Kenichi
Sakaide-shi
Kagawa 762-0012 (JP)
• KUDO, Daisuke
Sakaide-shi
Kagawa 762-0012 (JP)

(74) Representative: TBK
Bavariaring 4-6
80336 München (DE)

(54) **FILLER FOR SYNTHETIC RESIN, SYNTHETIC RESIN COMPOSITION, MANUFACTURING METHOD THEREFOR, AND MOLDED OBJECT MADE THEREFROM**

(57) The present invention relates to a filler for inhibiting foaming caused due to $CO_2$, which comprises hydrotalcite compound particles and calcium hydroxide particles and/or magnesium hydroxide particles, the use of the filler in a synthetic resin, and a shaped article formed therefrom, more particularly to a filler for inhibiting foaming, which is obtained by incorporating, into hydrotalcite compound particles represented by the following chemical structural formula (1): $[(Mg^{2+})_y (M_1^{2+})_{(1-y)}]_{1-x} M^{3+}_x (OH)_2 CO_3^{2-} \cdot mH_2O$ (Formula 1) (wherein $M_1^{2+}$ represents a bivalent metal, $M^{3+}$ represents at least one trivalent metal, and x, y, and m represent valences satisfying the relationships: $0<x<0.5$, $0 \leq m<2$, and $0<y \leq 1$), calcium hydroxide particles and/or magnesium hydroxide particles so that the (calcium hydroxide particles and/or magnesium hydroxide particles) : (hydrotalcite compound particles) ratio becomes 2:8 to 9:1, a resin composition having the filler incorporated thereinto and causing no foaming problem, and a shaped article formed therefrom.

**Description**

Technical Field

The present invention relates to an agent for inhibiting a filler for synthetic resin from causing a foaming problem and a filler for synthetic resin causing no foaming problem, which is to be incorporated into a synthetic resin, and more particularly to a filler for synthetic resin having an inhibitory effect on the foaming caused due to carbon dioxide gas, which filler is obtained by incorporating into hydrotalcite compound particles having specific properties calcium hydroxide and/or magnesium hydroxide in a predetermined amount as an agent for inhibiting a filler for synthetic resin from causing a foaming problem, an excellent synthetic resin composition causing no foaming problem, which is obtained by incorporating the filler into a synthetic resin, a method for producing the same, and a shaped article formed therefrom.

Background Art

A hydrotalcite compound has been developed as an excellent stabilizer for synthetic resin. As compared to a conventional Cd/Zn composite metal soap stabilizer, the hydrotalcite compound exhibits extremely excellent safety, thermal stability, and transparency, but, on the other hand, the hydrotalcite compound has disadvantages in that a shaped article formed from a resin containing the hydrotalcite compound suffers not only discoloration but also foaming. With respect to the stabilizer, the use of hydrotalcite and a zinc salt of an organic acid and a β-diketone compound or a metal salt thereof in combination or the use of hydrotalcite and an organotin compound in combination is then proposed, and the problem of discoloration has been overcome (patent document 1). However, the problem of foaming has not yet been solved.
On the other hand, there is a method in which hydrotalcite is heated to a temperature of about 300°C to remove water of crystallization from the hydrotalcite, and the resultant hydrotalcite having substantially no water of crystallization is used as a stabilizer. However, a water absorption phenomenon occurs in a stabilizer composition during a period of from the preparation of the composition through the actual use of the composition, and the problem has not been solved. The foaming problem is a large obstacle particularly to the production of a rigid polyvinyl chloride resin shaped article using a molding temperature of about 200°C.
With respect to causes of the foaming, there are considered one such that the removal of water of crystallization from hydrotalcite starts at a molding temperature of about 180°C or higher to cause foaming in an article being molded, and one such that part of a polyvinyl chloride resin decomposes at a molding temperature to generate hydrogen chloride gas, and the hydrogen chloride gas reacts with carbonic acid ions in hydrotalcite to generate $CO_2$, causing foaming in an article being molded. And, as a method for removing the above two causes of the foaming, a method of using hydrotalcite and magnesium oxide in combination has been found (patent document 2). However, this method cannot completely solve the problem of foaming.

Related Art References

Patent documents

Patent document 1: JP-A-57-80444
Patent document 2: JP-A-63-46248
Patent document 3: JP-B-46-2280
Patent document 4: U.S. Patent No. 3,879,525
Patent document 5: JP-B-50-30039
Patent document 6: JP-B-48-29477
Patent document 7: JP-B-51-29129

Summary of the Invention

Problems that the Invention is to Solve

Accordingly, it is an object of the present invention to provide a filler for synthetic resin having an inhibitory effect on the foaming caused due to $CO_2$, a synthetic resin composition having the filler incorporated thereinto and causing no foaming problem, a method for producing the same, and a shaped article formed therefrom.
More particularly, an object of the invention is to provide an agent for inhibiting a hydrotalcite compound used as a filler for synthetic resin from causing a foaming problem, a filler for synthetic resin causing no foaming problem, which is to be incorporated into a synthetic resin, a synthetic resin composition having the filler incorporated thereinto and causing no foaming problem, a method for producing the same, and a shaped article formed therefrom.

Means for Solving the Problems

The present inventors have conducted studies in order to satisfy the above requirements, and have considered that a main cause of the foaming resides in the presence of $CO_2$ and have found that, by incorporating calcium hydroxide and/or magnesium hydroxide in a specific ratio into hydrotalcite compound particles, a filler for synthetic resin having an inhibitory effect on the foaming caused due to $CO_2$ and a synthetic resin composition having the filler incorporated thereinto and causing no foaming problem can be obtained.

Thus, in the invention, it has been found that, by incorporating into (a) hydrotalcite particles represented by the following chemical structural formula (1):

$$[(Mg^{2+})_y(M_1^{2+})_{(1-y)}]_{1-x}M^{3+}_x(OH)_2CO_3^{2-}\bullet mH_2O \text{ (Formula 1)}$$

wherein $M_1^{2+}$ represents a bivalent metal, $M^{3+}$ represents at least one trivalent metal, and x, y, and m represent valences satisfying the relationships: $0 < x < 0.5$, $0 \leq m < 2$, and $0 < y \leq 1$ (b) calcium hydroxide and/or magnesium hydroxide so that the (calcium hydroxide particles and/or magnesium hydroxide particles):(hydrotalcite compound particles) ratio becomes effective in inhibiting a foaming problem, preferably becomes 2:8 to 9:1, a filler for synthetic resin having an inhibitory effect on the foaming caused due to $CO_2$ can be obtained.

Further, it has been found that, by incorporating the filler of the invention into a synthetic resin, a synthetic resin composition causing no foaming problem and a shaped article formed therefrom can be obtained.

Specifically, the invention is directed to an agent for inhibiting a filler for synthetic resin from causing a foaming problem described in the following items (1) and (2).

(1) An agent for inhibiting (a) a filler for synthetic resin from causing a foaming problem, characterized by comprising calcium hydroxide particles and/or magnesium hydroxide particles,

the (a) filler for synthetic resin comprising hydrotalcite compound particles represented by the following chemical structural formula (1):

$$[(Mg^{2+})_y(M_1^{2+})_{(1-y)}]_{1-x}M^{3+}_x(OH)_2CO_3^{2-}\bullet mH_2O \text{ (Formula 1)}$$

wherein $M_1^{2+}$ represents a bivalent metal, $M^{3+}$ represents at least one trivalent metal, and x, y, and m represent valences satisfying the following relationships:

$$0 < x < 0.5,$$

$$0 < y \leq 1,$$

and

$$0 \leq m < 2.$$

(2) The agent for inhibiting a foaming problem according to item (1) above, wherein the calcium hydroxide particles and/or magnesium hydroxide particles are calcium hydroxide particles having an average secondary particle diameter of 0.1 to 35 $\mu$m as measured by a laser diffraction scattering method and/or magnesium hydroxide particles having an average secondary particle diameter of 0.01 to 10 $\mu$m as measured by a laser diffraction scattering method.

Further, the invention is directed to a filler for synthetic resin causing no foaming problem described in the following items (3) to (10).

(3) A filler for synthetic resin causing no foaming problem, characterized in that the filler is obtained by incorporating calcium hydroxide particles and/or magnesium hydroxide particles into hydrotalcite compound particles represented by the following chemical structural formula (1):

$$[(Mg^{2+})_y(M_1^{2+})_{(1-y)}]_{1-x}M^{3+}_x(OH)_2CO_3^{2-}\bullet mH_2O \text{ (Formula 1)}$$

wherein $M_1^{2+}$ represents a bivalent metal, $M^{3+}$ represents at least one trivalent metal, and x, y, and m represent valences satisfying the following relationships:

$$0 < x < 0.5,$$

$$0 < y \leq 1,$$

and

$$0 \leq m < 2.$$

(4) The filler for synthetic resin causing no foaming problem according to item (3) above, wherein the calcium hydroxide particles and/or magnesium hydroxide particles are calcium hydroxide particles having an average secondary particle diameter of 0.1 to 35 $\mu$m as measured by a laser diffraction scattering method and/or magnesium hydroxide particles having an average secondary particle diameter of 0.01 to 10 $\mu$m as measured by a laser diffraction scattering method.

(5) The filler for synthetic resin causing no foaming problem according to item (3) or (4) above, wherein the calcium hydroxide particles and/or magnesium hydroxide particles and the hydrotalcite compound particles are incorporated so that the (calcium hydroxide particles and/or magnesium hydroxide particles):(hydrotalcite compound particles) ratio becomes 2:8 to 9:1.

(6) The filler for synthetic resin causing no foaming problem according to item (5) above, wherein the calcium hydroxide particles and/or magnesium hydroxide particles and the hydrotalcite compound particles are incorporated so that the (calcium hydroxide particles and/or magnesium hydroxide particles):(hydrotalcite compound particles) ratio becomes 3:7 to 6:4.

(7) The filler for synthetic resin causing no foaming problem according to any one of items (3) to (6) above, wherein the hydrotalcite particles have been decrystallized at a temperature of 150 to 300°C.

(8) The filler for synthetic resin causing no foaming problem according to any one of items (3) to (6) above, wherein the hydrotalcite particles have been subjected to surface treatment using at least one surface treatment agent selected from the group consisting of a higher fatty acid, an anionic surfactant, a phosphoric ester, a coupling agent, and an ester of a polyhydric alcohol and a fatty acid.

(9) The filler for synthetic resin causing no foaming problem according to any one of items (3) to (6) above, wherein the hydrotalcite compound particles have on the surfaces thereof an acid-resistant coating of at least one member selected from the group consisting of a silicon compound, a boron compound, and an aluminum compound.

(10) The filler for synthetic resin causing no foaming problem according to any one of items (3) to (6) above, wherein the hydrotalcite compound particles have an average secondary particle diameter of 0.01 to 10 $\mu$m as measured by a laser diffraction scattering method.

Further, the invention is directed to a synthetic resin composition causing no foaming problem described in the following items (11) to (15).

(11) A synthetic resin composition causing no foaming problem, characterized in that the composition is obtained by incorporating 0.01 to 80 parts by weight of the filler for synthetic resin causing no foaming problem according to any one of items (6) to (10) above into 100 parts by weight of a synthetic resin.

(12) The synthetic resin composition according to item (11) above, characterized in that 0.01 to 30 parts by weight of the filler is incorporated into 100 parts by weight of the synthetic resin.

(13) The synthetic resin composition according to item (11) above, characterized in that 10 to 80 parts by weight of the filler is incorporated into 100 parts by weight of the synthetic resin.

(14) The synthetic resin composition according to item (13) above, wherein the synthetic resin is vinyl chloride resin, so that the synthetic resin composition has excellent thermal stability.

(15) The synthetic resin composition according to item (13) above, wherein the synthetic resin is a polyolefin or a copolymer thereof, or a halogen-containing resin, so that the synthetic resin composition is flame-retardant.

Further, the invention is directed to a shaped article described in the following item (16).

(16) A shaped article formed from the synthetic resin composition according to any one of items (11) to (15) above.

Further, the invention is directed to a method for producing a synthetic resin composition described in the following items (17) to (29).

(17) A method for producing a synthetic resin composition, characterized by comprising incorporating into a synthetic resin, as a filler for synthetic resin causing no foaming problem, calcium hydroxide particles and/or magnesium hydroxide particles together with hydrotalcite compound particles represented by the following chemical structural formula (1):

$$[(Mg^{2+})_y(M_1^{2+})_{(1-y)}]_{1-x}M^{3+}{}_x(OH)_2CO_3{}^{2-}\bullet mH_2O \text{ (Formula 1)}$$

wherein $M_1^{2+}$ represents a bivalent metal, $M^{3+}$ represents at least one trivalent metal, and x, y, and m represent valences satisfying the following relationships:

$$0 < x < 0.5,$$

$$0 < y \leq 1,$$

and

$$0 \leq m < 2.$$

(18) The method for producing a synthetic resin composition according to item (17) above, wherein the calcium hydroxide particles and/or magnesium hydroxide particles are calcium hydroxide particles having an average secondary particle diameter of 0.1 to 35 $\mu$m as measured by a laser diffraction scattering method and/or magnesium hydroxide particles having an average secondary particle diameter of 0.01 to 10 $\mu$m as measured by a laser diffraction scattering method.

(19) The method for producing a synthetic resin composition according to item (17) above, wherein the calcium hydroxide particles and/or magnesium hydroxide particles and the hydrotalcite compound particles are incorporated so that the (calcium hydroxide particles and/or magnesium hydroxide particles):(hydrotalcite compound particles) ratio becomes 2: 8 to 9:1.

(20) The method for producing a synthetic resin composition according to item (17) above, wherein the calcium hydroxide particles and/or magnesium hydroxide particles and the hydrotalcite compound particles are incorporated so that the (calcium hydroxide particles and/or magnesium hydroxide particles):(hydrotalcite compound particles) ratio becomes 3: 7 to 6:4.

(21) The method for producing a synthetic resin composition according to item (17) above, wherein the hydrotalcite particles have been decrystallized at a temperature of 150 to 300°C.

(22) The method for producing a synthetic resin composition according to item (17) above, wherein the hydrotalcite particles have been subjected to surface treatment using at least one surface treatment agent selected from the group consisting of a higher fatty acid, an anionic surfactant, a phosphoric ester, a coupling agent, and an ester of a polyhydric alcohol and a fatty acid.

(23) The method for producing a synthetic resin composition according to item (17) above, wherein the hydrotalcite compound particles have on the surfaces thereof an acid-resistant coating of at least one member selected from the group consisting of a silicon compound, a boron compound, and an aluminum compound.

(24) The method for producing a synthetic resin composition according to item (17) above, wherein the hydrotalcite compound particles have an average secondary particle diameter of 0.01 to 10 $\mu$m as measured by a laser diffraction scattering method.

(25) The method for producing a synthetic resin composition according to any one of items (17) to (24) above, characterized in that 0.01 to 80 parts by weight of the filler for synthetic resin causing no foaming problem is incorporated into 100 parts by weight of the synthetic resin.

(26) The method for producing a synthetic resin composition according to any one of items (17) to (24) above, characterized in that 0.01 to 30 parts by weight of the filler for synthetic resin causing no foaming problem is incorporated into 100 parts by weight of the synthetic resin.

(27) The method for producing a synthetic resin composition according to any one of items (17) to (24) above, characterized in that 10 to 80 parts by weight of the filler for synthetic resin causing no foaming problem is incorporated into 100 parts by weight of the synthetic resin.

(28) The method for producing a synthetic resin composition according to any one of items (17) to (27) above, wherein the synthetic resin is vinyl chloride resin, so that the synthetic resin composition has excellent thermal stability.

(29) The method for producing a synthetic resin composition according to any one of items (17) to (27) above, wherein the synthetic resin is a polyolefin or a copolymer thereof, or a halogen-containing resin, so that the synthetic resin composition is flame-retardant.

Advantage of the Invention

In the invention, there can be provided an agent having an inhibitory effect on the foaming caused due to $CO_2$ generated in a synthetic resin by a reaction of a hydrotalcite compound used as a filler for synthetic resin, a filler for synthetic resin causing no foaming problem, which is to be incorporated into a synthetic resin, a synthetic resin composition having the filler incorporated thereinto and causing no foaming problem, a method for producing the same, and a shaped article formed therefrom.

Mode for Carrying Out the Invention

Hereinbelow, the present invention will be described in detail.

[Hydrotalcite compound particles]

The hydrotalcite compound particles to be used in the invention are represented by the following chemical structural formula (1).

$$[(Mg^{2+})_y(M_1^{2+})_{(1-y)}]_{1-x}M^{3+}_x(OH)_2CO_3^{2-}\bullet mH_2O \text{ (Formula 1)}$$

In the chemical structural formula (1) above, $M_1^{2+}$ represents a bivalent metal, $M^{3+}$ represents at least one trivalent metal, x represents a valence satisfying the relationship: $0 < x < 0.5$, y represents a valence satisfying the relationship: $0 < y \leq 1$, and m represents a valence satisfying the relationship: $0 \leq m < 2$.

The hydrotalcite compound particles in the invention have an average secondary particle diameter of 0.01 to 10 $\mu$m, preferably 0.05 to 5 $\mu$m, further preferably 0.1 to 1 $\mu$m, as measured by a laser diffraction scattering method, that is, almost all the hydrotalcite compound particles are primary particles which do not suffer aggregation into secondary particles.

Further, the hydrotalcite compound particles have a specific surface area of 1 to 60 $m^2/g$, preferably 5 to 50 $m^2/g$, as measured by a BET method. When the average secondary particle diameter of the hydrotalcite compound particles is larger than the above-mentioned value, it is difficult to satisfactorily disperse the particles in a resin, so that the hydrotalcite compound particles cannot satisfactorily exhibit the ability to neutralize a free halogen contained in the resin, causing a problem in that the thermal stability is poor, the mechanical strength is lowered, or the appearance is poor. Further, when the specific surface area of the hydrotalcite compound particles exceeds 60 $m^2/g$ as measured by a BET method, the dispersibility of the hydrotalcite compound particles in a resin is poor, so that the thermal stability is lowered.

Further, with respect to the hydrotalcite compound particles to be used in the invention, those which have been dehydrated with respect to the water of crystallization can be used.

The hydrotalcite compound particles dehydrated with respect to the water of crystallization are the hydrotalcite compound particles from which the water of crystallization present between the layers of the hydrotalcite compound particles has been removed by heating and drying the hydrotalcite compound particles. Specifically, such particles are obtained by heating the hydrotalcite compound particles at a temperature in the range of from 170 to 350°C, preferably from 200 to 300°C. When the heating temperature is lower than 170°C, the dehydration with respect to the water of crystallization requires a prolonged period of time, and, when the heating temperature is higher than 300°C, it is likely that the hydrotalcite compound crystal per se easily breaks, making it difficult to control the heating time.

By using the hydrotalcite compound dehydrated with respect to the water of crystallization as a stabilizer in a halogen-containing resin, a halogen-containing resin shaped article free from discoloration can be obtained. It is presumed that, with respect to the hydrogen halide generated due to the decomposition of a resin caused by heat of the molding or heat of or irradiation with sunlight or the like when used in the form of a shaped article, the dehydrated hydrotalcite compound encloses the hydrogen halide in the portions between the layers of the hydrotalcite faster than a hydrotalcite which is not dehydrated with respect to the water of crystallization. That is, in the hydrotalcite particles from which the water of crystallization present between the layers of the hydrotalcite particles is removed, the hydrogen halide is ion-exchanged with carbonic acid ions without interfering from the water of crystallization. The hydrotalcite compound particles dehydrated with respect to the water of crystallization have less water of crystallization and hence are less likely to cause a foaming problem than hydrotalcite compound particles which are not dehydrated with respect to the water of crystallization. However, merely the dehydration with respect to the water of crystallization is not satisfactory.

[Agent for inhibiting a filler for synthetic resin from causing a foaming problem]

The present inventors have made with extensive and intensive studies. As a result, they have found that, with respect to the foaming caused when the hydrotalcite compound particles are used as a filler for a resin, the cause of the foaming in the resin resides in the presence of carbon dioxide gas, i.e., $CO_2$ amount per unit area affects the forming rather than the water of crystallization present in the hydrotalcite compound particles do. With respect to the filler for inhibiting foaming of the invention obtained by incorporating calcium hydroxide particles and/or magnesium hydroxide particles in a predetermined amount into the hydrotalcite compound particles, the present inventors have determined a carbon dioxide adsorption coefficient of the filler of the invention by measuring a $CO_2$ amount and a BET method specific surface area of the filler, and have found the relationship between the carbon dioxide adsorption coefficient of the filler and the foaming. Specifically, the larger the carbon dioxide adsorption coefficient of the filler of the invention, the more likely the foaming is caused in the synthetic resin having incorporated the filler, and therefore, the carbon dioxide adsorption coefficient of the filler is desirably 100 or less, preferably 50 or less, further preferably 20 or less.

It has been found that a synthetic resin composition causing no foaming problem can be obtained by incorporating the foaming inhibiting filler of the invention into a synthetic resin wherein the filler satisfies the above-mentioned carbon dioxide adsorption coefficient and the (calcium hydroxide particles and/or magnesium hydroxide particles) : (hydrotalcite compound particles) ratio is 2:8 to 9:1, preferably 3:7 to 7:3, further preferably 4.5:5.5 to 5.5:4.5. The filler for synthetic resin causing no foaming problem of the invention presents a foaming preventing effect when incorporated into a synthetic resin.

[Method for producing hydrotalcite compound particles]

With respect to the method for producing the hydrotalcite compound particles to be used in the invention, or in the invention and the conditions for the method, there is no particular limitation as long as hydrotalcite compound particles satisfying the Mg and Al amounts and the acid resistance can be obtained. The raw materials for obtaining the hydrotalcite compound particles and the conditions for the production thereof are known, and basically the hydrotalcite compound particles can be produced in accordance with a known method {for example, patent document 3 and the corresponding U.S. Patent (patent document4), and patent documents 5, 6, and 7}.

On the other hand, with respect to the raw materials used for mass-producing the hydrotalcite compound particles on a commercial scale, representative examples of aluminum sources include aluminum sulfate and aluminum hydroxide, representative examples of magnesium sources include magnesium chloride (brine and ionic bittern), and representative examples of alkali sources include lime (or slaked lime), and most of these sources are natural resources or treatment products thereof.

The hydrotalcite compound particles in the invention may have on the surfaces thereof a surface coating of at least one member selected from the group consisting of a silicon compound, a boron compound, and an aluminum compound to improve the acid resistance of the hydrotalcite compound particles.

[Calcium hydroxide particles and/or magnesium hydroxide particles]

The calcium hydroxide particles and/or magnesium hydroxide particles used in the invention may be either a synthetic product or a natural product. 〒  they have no particular limitation, but preferably the calcium hydroxide particles have an average secondary particle diameter of 0.1 to 35 $\mu$m as measured by a laser diffraction scattering method, and the magnesium hydroxide particles have an average secondary particle diameter of 0.01 to 10 $\mu$m as measured by a laser diffraction scattering method.

With respect to the method for incorporating the calcium hydroxide particles or magnesium hydroxide particles into the hydrotalcite compound particles, there is no particular limitation as long as they can be uniformly mixed with each other, and, for example, powders of these particles may be mixed with each other using a tumbling mixer or the like, or slurries of these particles before drying may be mixed with each other and then dried.

[Method for incorporating the filler into a resin]

With respect to the method for incorporating the filler of the invention (hydrotalcite compound particles and calcium hydroxide particles and/or magnesium hydroxide particles) into a resin, there is no particular limitation. For example, a method may be practiced using similar to known or commonly used means for incorporating a stabilizer, a filler, or the like into a resin, the filler and other ingredients to be incorporated to a resin are together or individually incorporated into a synthetic resin as uniformly as possible. Examples of the methods include a method of incorporating the filler into a resin utilizing known mixing means, such as a ribbon blender, a high-speed mixer, a kneader, a pelletizer, or an extruder, and a method in which a suspension comprising the hydrotalcite compound particles as an effective ingredient is added to a slurry obtained after polymerization and the resultant mixture is stirred and then dried.

[Method for further modifying the hydrotalcite compound particles]

The hydrotalcite compound particles in the invention can be incorporated as such into a synthetic resin, but there can be used the hydrotalcite compound particles treated with a surface treatment agent, and generally, the treated particles are preferably used.
Examples of the surface treatment agents include at least one member selected from the group consisting of a higher fatty acid, an alkali metal salt of a higher fatty acid, an anionic surfactant, a phosphoric ester, a coupling agent (silane, titanate, or aluminum coupling agent), an ester of a polyhydric alcohol and a fatty acid, a sulfate ester of a higher alcohol, a silicon compound, a phosphorus compound, an aluminum compound, an inorganic acid, and an organic acid.

Example of the surface treatment agents preferably used include: (a) higher fatty acids having 10 or more carbon atoms, such as stearic acid, erucic acid, palmitic acid, lauric acid, and behenic acid; (b) alkali metal salts of the above higher fatty acid; (c) anionic surfactants, such as sulfate ester salts, amido-bond sulfate ester salts, ester-linkage sulfate ester salts, ester-linkage sulfonates, amido-bond sulfonates, ether-linkage sulfonates, ether-linkage alkylarylsulfonates, ester-linkage alkylarylsulfonates, and amido-bond alkylarylsulfonates of polyethylene glycol ether; (d) phosphoric esters, such as a mono-or diester of orthophosphoric acid and oleyl alcohol, stearyl alcohol, or the like, and a mixture thereof, and an acid type, alkali metal salt, or amine salt thereof; (e) silane coupling agents, such as vinylethoxysilane, vinyl-tris(2-methoxy-ethoxy)silane, $\gamma$-methacryloxypropyltrimethoxysilane, $\gamma$-aminopropyltrimethoxysilane, $\beta$ (3,4-epoxycyclohexyl)ethyltrimethoxysilane, $\gamma$-glycidoxypropyltrimethoxysilane, and $\gamma$-mercaptopropyltrimethoxysilane; titanate coupling agents, such as isopropyltriisostearoyl titanate, isopropyl tris(dioctylpyrophosphate) titanate, isopropyltris(N-aminoethyl-aminoethyl) titanate, and isopropyltridecylbenzenesulfonyl titanate; and aluminum coupling agents, such as acetoalkoxyaluminum diisopropylate; (f) esters of a polyhydric alcohol and a fatty acid, such as glycerol monostearate and glycerol monooleate; (g) sulfate salts of a higher alcohol, such as stearyl alcohol or oleyl alcohol; and (h) silicon compounds, phosphorus compounds, and aluminum compounds having $SiO(OH)_3^-$, $Al(OH)_4^-$, $Cl^-$, $NO_3^-$, $H_2PO_4^-$, $C_6H_7O_7^-$, $SiO_2(OH)_2^{2-}$, $Si_2O_6(OH)_6^{2-}$, $HPO_4^{2-}$, $C_6H_6O_7^{2-}$, $PO_4^{3-}$, $C_6H_5O_7^3$, $SiO4^{4-}$, or $Si_4O_8(OH)_4^{4-}$.

The surface treatment of the hydrotalcite compound particles using the above-mentioned surface treatment agent can be conducted by a known wet method or dry method. For example, a wet method may be used in which the surface treatment agent in a liquid state or in the form of an emulsion is added to a slurry of the hydrotalcite compound particles and they are mechanically well mixed with each other at a temperature of up to about 100°C. The amount of the surface treatment agent added can be appropriately selected, but is preferably about 10% by weight or less, based on the weight of the hydrotalcite compound particles.

In the invention, by using the hydrotalcite compound particles which have on the surfaces thereof an acid-resistant coating of at least one member selected from the group consisting of a silicon compound, a boron compound, and an aluminum compound, and which, if necessary, are additionally subjected to surface treatment with at least one member of the above-mentioned surface treatment agents, a resin composition causing no foaming and having further higher acid resistance can be obtained.

With respect to the acid-resistant coating agent, examples of silicon compounds include sodium silicates, such as sodium metasilicate and sodium orthosilicate, potassium silicates, such as potassium metasilicate and potassium orthosilicate, and water glass; examples of boron compounds include sodium tetraborate, sodium metaborate, potassium tetraborate, and potassium metaborate; and examples of aluminum compounds include sodium aluminates, such as sodium orthoaluminate and sodium metaaluminate, potassium aluminates, such as potassium orthoaluminate and potassium metaaluminate, and aluminum salts of a mineral acid, such as aluminum chloride, aluminum nitrate, aluminum sulfate, and aluminum phosphate.

The acid-resistant coating agent is used for the coating in an amount of 2% by weight or less, based on the weigh of the hydrotalcite compound particles. Even when the hydrotalcite compound particles are coated with the acid-resistant coating agent in an amount of exceeding 2% by weight, the acid resistance is not particularly improved any more, and a problem arises in that the operation properties of the dehydration and filtration for the surface-treated particles by a wet method become poor, and therefore the amount of the acid-resistant coating agent is desirably 2% by weight or less.

With respect to the surface-treated hydrotalcite compound particles, if necessary, for example, washing with water, dehydration, granulation, drying, pulverization, and classification methods are appropriately selected and conducted, so that the particles can be in the form of an ultimate product.

[Amount of the filler incorporated into a resin]

When the filler of the invention comprising the hydrotalcite compound particles and calcium hydroxide particles and/or magnesium hydroxide particles is used as a thermal stabilizer for resin, 0.001 to 20 parts by weight of the filler, preferably 0.01 to 15 parts by weight of the filler is incorporated into 100 parts by weight of a resin. When the filler of the invention is used as a flame retardant for synthetic resin, 10 to 80 parts by weight of the filler is incorporated into 100 parts by weight of a resin.

[Type of synthetic resin]

The synthetic resin into which the hydrotalcite compound particles of the invention are incorporated may be a synthetic resin which is generally used as a shaped article, and examples of the synthetic resins include polyolefin and copolymers thereof, specifically, polypropylene resins, such as a polypropylene homopolymer and an ethylene-propylene copolymer; polyethylene resins, such as high density polyethylene, low density polyethylene, ultra-low density polyethylene, EVA (ethylene vinyl acetate resin), EEA (ethylene ethyl acrylate resin), EEA (ethylene ethyl acrylate resin), EMA (ethylene-methyl acrylate copolymer resin), EAA (ethylene-acrylic acid copolymer resin), and ultrahigh molecular-weight polyethylene; and polymers or copolymers of a $C_2$-$C_6$ olefin ($\alpha$-ethylene), such as polybutene and poly(4-methylpentene-1).

Examples of the synthetic resins include thermoplastic resins, such as a copolymer of an olefin and a diene, an ethylene-acrylate copolymer, polysryrene, polyvinyl acetate, an ABS resin, an AAS resin, an AS resin, an MBS resin, an ethylene/vinyl chloride copolymer resin, an ethylene-vinyl acetate copolymer resin, an ethylene-vinyl chloride-vinyl acetate graft polymer resin, polyvinylidene chloride, polyvinyl chloride, chlorinated polyethylene, chlorinated polypropylene, a vinyl chloride-propylene copolymer, a vinyl acetate resin, a phenoxy resin, polyacetal, polyamide, polyimide, polycarbonate, polysulfone, polyphenylene oxide, polyphenylene sulfide, polyethylene terephthalate, polybutylene terephthalate, and a methacrylic resin.

Further examples of the synthetic resins include curing resins, such as rigid polyvinyl chloride, an epoxy resin, a phenolic resin, a melamine resin, an unsaturated polyester resin, an alkyd resin, an urea resin, polyurethane, and thermosetting polyimide, polytetrafluoroethylene, polyether sulfone, non-crystalline polyarylate, a liquid crystalline polymer, polyether ether ketone, thermoplastic polyimide, polyamide-imide, and synthetic rubbers, such as an EPDM, a butyl rubber, an isoprene rubber, an SBR, an NBR, chlorosulfonated polyethylene, an NIR, an urethane rubber, a butadiene rubber, an acrylic rubber, a silicone rubber, and a fluororubber.

[Method for incorporating the filler into a resin]

With respect to the method for incorporating the filler comprising the hydrotalcite compound particles and calcium hydroxide particles and/or magnesium hydroxide particles into a resin to prepare the composition of the invention, there is no particular limitation, and, for example, a method may be employed in which, using means similar to known means commonly used for incorporating a stabilizer, a flame retardant, a filler, or the like into a resin, the filler and other ingredients to be incorporated to a resin are together or individually incorporated into a synthetic resin as uniformly as possible. Examples of the methods include a method of incorporating the filler into a resin utilizing known mixing means, such as a ribbon blender, a high-speed mixer, a kneader, a pelletizer, or an extruder, and a method in which a suspension of a heat deterioration agent comprising the hydrotalcite particles as an effective ingredient is added to a slurry obtained after polymerization and the resultant mixture is stirred and then dried.

[Other additives]

In the resin composition causing no foaming problem of the invention, in addition to the above-mentioned components, other additives commonly used may be incorporated. Examples of such additives include an antioxidant, an ultraviolet light screening agent, an antistatic agent, a pigment, a plasticizer, a filler, a reinforcement, an organohalogen flame retardant, a crosslinking agent, a light stabilizer, an ultraviolet light absorber, a lubricant, and other inorganic and organic thermal stabilizers.

Hereinbelow, the present invention will be described in more detail with reference to the following Examples.

The invention is described in detail with reference to the Examples.

In the Examples, the measurement values for the filler comprising hydrotalcite compound particles and calcium hydroxide particles and/or magnesium hydroxide particles mean values as measured by the measurement methods described in (a) $CO_2$ Amount, (b) Carbon adsorption coefficient, (c) Average secondary particle diameter, and (d) BET method specific surface area.

(a) $CO_2$ Amount

A $CO_2$ amount contained in a sample was measured by titration using an AGK type $CO_2$ simple precision

measurement apparatus.

(b) Carbon dioxide adsorption coefficient

A carbon dioxide adsorption coefficient is determined by the following calculation.

```
Carbon dioxide adsorption coefficient

    = Calculation formula A ÷ Calculation formula B
```

Calculation formula A: {Mole of $CO_2$ in the incorporated hydrotalcite compound particles x Avogadro's number (6.02 × $10^{23}$) × $CO_2$ Occupancy area (3.24 $Å^2$ on the assumption that the C=O bond distance is 1.62 Å)}

```
Calculation formula B: {Surface area of the incorporated calcium

hydroxide particles or magnesium hydroxide particles (Weight of the

incorporated particles × Specific surface area)}
```

(c) Average secondary particle diameter

An average secondary particle diameter is measured and determined using MICROTRAC particle size distribution meter, Type X-100 (HRA), manufactured by NIKKISO CO., LTD.
700 mg of a sample powder is placed in a beaker having a volume of 100 mL, and 5 mL of methanol is added to and mixed with the sample powder, and 70 mL of a 0.2 W/V% sodium hexametaphosphate solution is measured using a graduated measuring cylinder and dropwise added to the sample, and the resultant mixture is subjected to dispersion treatment using ultrasonic waves (MODEL US-300, manufactured by NISSEI Corporation; current: 300 μA) for 3 minutes and then, within one minute after the dispersion, 2.5 to 4.0 ml of the resultant dispersion is taken and placed in a sample chamber of the above-mentioned particle size distribution meter to measure a particle size distribution. The measurement is performed twice in total, and an arithmetic mean value of the 50% cumulative secondary particle diameters obtained in the individual measurements is determined by making a calculation and taken as an average secondary particle diameter of the sample.

(d) BET method specific surface area

A specific surface area was measured by a liquid nitrogen adsorption method.

[Preparation Example 1] (Hydrotalcite compound particles a)

Ionic bittern is transferred to a concentration adjustment tank, and zinc chloride and aluminum sulfate are added to the bittern to prepare an aqueous mixture solution having an Mg concentration of 0.945 mol/L, an Al concentration of 0.63 mol/L, and a Zn concentration of 0.315 mol/L. In this instance, precipitates of calcium sulfate are caused in the mixing tank, and hence removed by filtration to obtain a solution (A). Then, sodium hydroxide is transferred to another concentration adjustment tank, and sodium carbonate powder and water are added to the sodium hydroxide to prepare an aqueous solution (B) containing NaOH in an amount of 2.7 mol/L and $Na_2CO_3$ in an amount of 0.23 mol/L.
The solution (A) and the solution (B) in a ratio of 1.4 L of the solution (B) relative to 1 L of the solution (A) were poured simultaneously into a reaction tank, in which water was placed in advance, while stirring so that the residence time became 60 minutes to obtain a reaction slurry of hydrotalcite.
800 L of the obtained reaction slurry was taken and maintained in an autoclave for heating maturation at 140°C while stirring for 6 hours. After cooling, the resultant slurry was transferred to a surface treatment tank and heated to 80°C while stirring, and 1.3 Kg of sodium stearate preliminarily dissolved in 50 L of warm water at 80°C was dropwise added to the slurry, and the resultant mixture was stirred for 30 minutes to complete a surface treatment. The resultant solid product was separated by filtration, and washed and emulsified again, followed by spray drying, to obtain a sample.
The result of an analysis showed that the obtained hydrotalcite compound particles had the following compositional formula: $Mg_{0.50}Zn_{0.17}Al_{0.33}(OH)_2(CO_3)_{0.17}$●$0.50H_2O$.
With respect to the obtained hydrotalcite compound particles, a specific surface area as measured by a BET method and an average secondary particle diameter as measured by a laser diffraction scattering method are shown in Table 1.

[Preparation Example 2] (Hydrotalcite compound particles b)

Purified brine was transferred to a concentration adjustment tank, and aluminum sulfate was added to the brine to prepare an aqueous mixture solution (A) having an Mg concentration of 1.69 mol/L and an Al concentration of 0.847 mol/L. Then, sodium hydroxide was transferred to another concentration adjustment tank, and sodium carbonate powder and water were added to the sodium hydroxide to prepare an aqueous solution (B) containing NaOH in an amount of 2.73 mol/L and $Na_2CO_3$ in an amount of 0.23 mol/L.

The aqueous mixture solution (A) and the aqueous solution (B) in a ratio of 2.2 L of the aqueous solution (B) relative to 1.18 L of the aqueous mixture solution (A) were poured simultaneously into a reaction tank, in which water was placed in advance, while stirring so that the residence time became 60 minutes to obtain a reaction slurry of a hydrotalcite compound. 800 L of the obtained reaction slurry was taken and maintained in an autoclave for heating maturation at 170°C while stirring for 6 hours. After cooling, the resultant slurry was transferred to a surface treatment tank and heated to 80°C while stirring, and 2 Kg of sodium stearate preliminarily dissolved in 50 L of warm water at 80°C was dropwise added to the slurry, and the resultant mixture was stirred for 30 minutes to complete a surface treatment. The resultant solid product was separated by filtration, and washed and dried using a hot air dryer, followed by hammer milling, to obtain a sample.

The result of an analysis showed that the obtained hydrotalcite compound particles had the following compositional formula: $Mg_{0.66}Al_{0.33}(OH)_2 (CO_3)_{017} \bullet 0.50H_2O$.

With respect to the obtained hydrotalcite compound particles, a specific surface area as measured by a BET method and an average secondary particle diameter as measured by a laser diffraction scattering method are shown in Table 1.

[Preparation Example 3] (Calcium hydroxide particles)

A calcium chloride solution having a concentration adjusted to 1.2 mol/L and a sodium hydroxide solution having a concentration adjusted to 2.3 mol/L were added in a continuous manner to a reaction tank, in which water was placed in advance, to obtain a suspension of calcium hydroxide particles.

1 L of the resultant suspension was washed, and then transferred to a surface treatment tank and heated to 80°C while stirring, and 1.6 g of sodium stearate preliminarily dissolved in warm water at 80°C was dropwise added to the suspension to complete a surface treatment. After completion of the surface treatment, filtration, washing, and drying were performed, followed by pulverization, to obtain a sample. With respect to the obtained calcium hydroxide particles, a specific surface area as measured by a BET method and an average secondary particle diameter as measured by a laser diffraction scattering method are shown in Table 1.

[Preparation Example 4] (Magnesium hydroxide particles)

In an autoclave was placed 400 ml of an aqueous solution of magnesium chloride having a concentration adjusted to 0.5 mol/L (Wako Pure Chemical Industries, Ltd.), and 121 ml of a 3 N sodium hydroxide solution was dropwise added to the aqueous solution while stirring to effect a reaction at room temperature (25°C) for 30 minutes, obtaining a suspension of magnesium hydroxide. The obtained suspension was subjected to hydrothermal treatment under conditions at 120°C for 2 hours, and dehydrated and then washed with water. The washed magnesium hydroxide was transferred to a surface treatment tank and heated to 80°C while stirring, and 0.2 g of sodium stearate preliminarily dissolved in warm water at 80°C was dropwise added to the magnesium hydroxide to complete a surface treatment. After completion of the surface treatment, filtration, washing, and drying were performed, followed by pulverization, to obtain a sample. With respect to the obtained magnesium hydroxide particles, a specific surface area as measured by a BET method and an average secondary particle diameter as measured by a laser diffraction scattering method are shown in Table 1.

[Table 1]

| Sample | Hydrotalcite compound particles a (Preparation Example 1) | Hydrotalcite compound particles b (Preparation Example 2) | Calcium hydroxide particles (Preparation Example 3) | Magnesium hydroxide particles (Preparation Example 4) |
|---|---|---|---|---|
| BET method specific surface area (m²/g) | 7.1 | 10.4 | 7.0 | 7.0 |
| Average secondary particle diameter (μm) | 0.5 | 0.4 | 2.2 | 0.7 |

Example 1

The hydrotalcite compound particles obtained in Preparation Example 1 and the calcium hydroxide particles obtained in Preparation Example 3 were incorporated so that the [calcium hydroxide particles:hydrotalcite compound particles a] ratio became 0:10, 1:9, 2:8, 3:7, 4:6, 5:5, 6:4, 7:3, 8:2, or 9:1, and $CO_2$ amounts of the resultant individual mixtures were measured and shown in Table 2.

Further, the resultant mixture and other ingredients were incorporated in the formulation shown below and kneaded together using a roll at 190°C for 3 minutes to prepare a rolled sheet having a thickness of 0.7 mm. The sheet was cut into a piece having a size of 5 cm × 8 cm, and heat at 190°C was applied to the piece using a compression molding machine, and the piece was taken out after 15 minutes and after 60 minutes, and thereafter taken out every 30 minutes, and observed in respect of the occurrence of foaming and the thermal stability. The deterioration of a resin is seen as discoloration, and therefore the thermal stability was evaluated by measuring a length of time until which the sample turned to a predetermined blackness, and further a thermal stability initial color was evaluated. The results are shown in Table 2.

Formulation
Polyvinyl chloride (degree of polymerization: 1,000)    1,250 g
Calcium carbonate                                        50
Zinc stearate                                            10
Calcium stearate                                          5
DPE                                                       2.5
DBM                                                       0.625
SBM                                                       0.625
Castor wax                                                2.5
PA-20                                                     6.25

Stabilizer in the invention

(Hydrotalcite compound particles a + Calcium hydroxide particles) 10

[Table 2]

| | Hydrotalcite compound particles a : Calcium hydroxide particles | | | | | | | | | |
|---|---|---|---|---|---|---|---|---|---|---|
| | 10:0 | 9:1 | 8:2 | 7:3 | 6:4 | 5:5 | 4:6 | 3:7 | 2:8 | 1:9 |
| $CO_2$ Amount (g) | 0.863 | 0.776 | 0.690 | 0.604 | 0.518 | 0.431 | 0.345 | 0.259 | 0.173 | 0.086 |
| Carbon dioxide adsorption coefficient | ∞ | 152.77 | 67.90 | 39.61 | 25.46 | 16.97 | 11.32 | 7.27 | 4.24 | 1.89 |

(continued)

| | Hydrotalcite compound particles a : Calcium hydroxide particles | | | | | | | | | |
|---|---|---|---|---|---|---|---|---|---|---|
| | 10:0 | 9:1 | 8:2 | 7:3 | 6:4 | 5:5 | 4:6 | 3:7 | 2:8 | 1:9 |
| Foaming After 15 minutes | ○ | ○ | ○ | ○ | ○ | ○ | ○ | ○ | ○ | ○ |
| After 60 minutes | ○ | ○ | ○ | ○ | ○ | ○ | ○ | ○ | ○ | ○ |
| After 90 minutes | △ | △ | ○ | ○ | ○ | ○ | ○ | ○ | ○ | ○ |
| After 120 minutes | × | × | ○ | ○ | ○ | ○ | ○ | ○ | ○ | ○ |
| After 150 minutes | × | × | △ | △ | ○ | ○ | ○ | ○ | ○ | ○ |
| Thermal stability initial color | White | White | White | White | White | White | White | White | White | White |
| Blacking time (minute) | 120 | 120 | 150 | 150 | >150 | >150 | >150 | 150 | 150 | 150 |

Example 2

A test was conducted in accordance with substantially the same method as in Example 1 except that the sample in Example 1 (Hydrotalcite compound particles a + Calcium hydroxide particles) was changed to (Hydrotalcite compound particles a + Magnesium hydroxide particles). The results are shown in Table 3.

[Table 3]

| | Hydrotalcite compound particles a : Magnesium hydroxide particles | | | | | | | | | |
|---|---|---|---|---|---|---|---|---|---|---|
| | 10:0 | 9:1 | 8:2 | 7:3 | 6:4 | 5:5 | 4:6 | 3:7 | 2:8 | 1:9 |
| $CO_2$ Amount (g) | 0.863 | 0.776 | 0.690 | 0.604 | 0.518 | 0.431 | 0.345 | 0.259 | 0.173 | 0.086 |
| Carbon dioxide adsorption coefficient | ∞ | 161.63 | 71.83 | 41.90 | 26.94 | 17.96 | 11.97 | 7.70 | 4.49 | 2.00 |
| Foaming After 15 minutes | ○ | ○ | ○ | ○ | ○ | ○ | ○ | ○ | ○ | ○ |
| After 60 minutes | ○ | ○ | ○ | ○ | ○ | ○ | ○ | ○ | ○ | ○ |
| After 90 minutes | △ | △ | ○ | ○ | ○ | ○ | ○ | ○ | ○ | ○ |
| After 120 minutes | × | × | ○ | ○ | ○ | ○ | ○ | ○ | ○ | ○ |
| After 150 minutes | × | × | △ | △ | ○ | ○ | ○ | ○ | ○ | ○ |
| Thermal stability initial color | White | White | White | White | White | White | White | White | White | White |

(continued)

| | Hydrotalcite compound particles a : Magnesium hydroxide particles | | | | | | | | | |
| --- | --- | --- | --- | --- | --- | --- | --- | --- | --- | --- |
| | 10:0 | 9:1 | 8:2 | 7:3 | 6:4 | 5:5 | 4:6 | 3:7 | 2:8 | 1:9 |
| Blacking time (minute) | 120 | 120 | 120 | 120 | 150 | 150 | 150 | 120 | 120 | 120 |

Example 3

A test was conducted in accordance with substantially the same method as in Example 1 except that the hydrotalcite compound particles a obtained in Preparation Example 1 were changed to the hydrotalcite compound particles b obtained in Preparation Example 2 and the [calcium hydroxide particles:hydrotalcite compound particles b] ratio was 0:10, 1:9, 3:7, 5:5, or 7:3. The results are shown in Table 4.
[Table 4]

| | Hydrotalcite compound particles b : Calcium hydroxide particles | | | | |
| --- | --- | --- | --- | --- | --- |
| | 10:0 | 9:1 | 7:3 | 5:5 | 3:7 |
| $CO_2$ Amount (g) | 0.938 | 0.844 | 0.657 | 0.469 | 0.281 |
| Carbon dioxide adsorption coefficient | ∞ | 166.12 | 43.07 | 18.46 | 7.91 |
| Foaming After 15 minutes After 60 minutes After 90 minutes After 120 minutes After 150 minutes | ○ ○ Δ × × | ○ ○ Δ × × | ○ ○ ○ ○ Δ | ○ ○ ○ ○ ○ | ○ ○ ○ ○ ○ |
| Thermal stability initial color | White | White | White | White | White |
| Blacking time (minute) | 120 | 120 | 150 | >150 | 150 |

Example 4

A test was conducted in accordance with substantially the same method as in Example 3 except that the sample was changed to Hydrotalcite compound particles b : Magnesium hydroxide particles. The results are shown in Table 5.
[Table 5]

| | Hydrotalcite compound particles b : Magnesium hydroxide particles | | | | |
| --- | --- | --- | --- | --- | --- |
| | 10:0 | 9:1 | 7:3 | 5:5 | 3:7 |
| $CO_2$ Amount (g) | 0.938 | 0.844 | 0.657 | 0.469 | 0.281 |
| Carbon dioxide adsorption coefficient | ∞ | 175.75 | 45.57 | 19.53 | 8.37 |
| Foaming After 15 minutes After 60 minutes After 90 minutes After 120 minutes After 150 minutes | ○ ○ Δ × × | ○ ○ Δ × × | ○ ○ ○ ○ Δ | ○ ○ ○ ○ ○ | ○ ○ ○ ○ ○ |
| Thermal stability initial color | White | White | White | White | White |
| Blacking time (minute) | 120 | 120 | 120 | 150 | 120 |

Example 5

A test was conducted in accordance with substantially the same method as in Example 1 except that the hydrotalcite compound particles a obtained in Preparation Example 1 and natural calcium oxide, manufactured by Nittetsu Mining Co., Ltd., which had been slaked and subjected to the same surface treatment as in Preparation Example 3, were incorporated so that the [natural calcium hydroxide:hydrotalcite compound particles a] ratio became 3:7. The results are shown in Table 6.

[Table 6]

| | |
|---|---|
| $CO_2$ Amount (g) | 0.604 |
| Carbon dioxide adsorption coefficient | 85.04 |
| Foaming<br>After 15 minutes<br>After 60 minutes<br>After 90 minutes<br>After 120 minutes<br>After 150 minutes | ○<br>○<br>○<br>Δ<br>× |
| Thermal stability initial color | White |
| Blacking time (minute) | 150 |

**Claims**

1. An agent for inhibiting (a) a filler for synthetic resin from causing a foaming problem, **characterized by** comprising calcium hydroxide particles and/or magnesium hydroxide particles,
   the (a) filler for synthetic resin comprising hydrotalcite compound particles represented by the following chemical structural formula (1):

   $$[(Mg^{2+})_y(M_1^{2+})_{(1-y)}]_{1-x}M^{3+}_x(OH)_2CO_3^{2-} \bullet mH_2O \qquad \text{(Formula 1)}$$

   wherein $M_1^{2+}$ represents a bivalent metal, $M^{3+}$ represents at least one trivalent metal, and x, y, and m represent valences satisfying the following relationships:

   $$0 < x < 0.5,$$

   $$0 < y \leq 1,$$

   and

   $$0 \leq m < 2.$$

2. The agent for inhibiting a foaming problem according to claim 1, wherein the calcium hydroxide particles and/or magnesium hydroxide particles are calcium hydroxide particles having an average secondary particle diameter of 0.1 to 35 $\mu$m as measured by a laser diffraction scattering method and/or magnesium hydroxide particles having an average secondary particle diameter of 0.01 to 10 $\mu$m as measured by a laser diffraction scattering method.

3. A filler for synthetic resin causing no foaming problem, **characterized in that** the filler is obtained by incorporating calcium hydroxide particles and/or magnesium hydroxide particles into hydrotalcite compound particles represented by the following chemical structural formula (1):

$$[(Mg^{2+})_y(M_1^{2+})_{(1-y)}]_{1-x}M^{3+}_x(OH)_2CO_3^{2-}\bullet mH_2O \qquad \text{(Formula 1)}$$

wherein $M_1^{2+}$ represents a bivalent metal, $M^{3+}$ represents at least one trivalent metal, and x, y, and m represent valences satisfying the following relationships:

$$0< x < 0.5,$$

$$0 < y \leq 1,$$

and

$$0 \leq m < 2.$$

4. The filler for synthetic resin causing no foaming problem according to claim 3, wherein the calcium hydroxide particles and/or magnesium hydroxide particles are calcium hydroxide particles having an average secondary particle diameter of 0.1 to 35 $\mu$m as measured by a laser diffraction scattering method and/or magnesium hydroxide particles having an average secondary particle diameter of 0.01 to 10 $\mu$m as measured by a laser diffraction scattering method.

5. The filler for synthetic resin causing no foaming problem according to claim 3 or 4, wherein the calcium hydroxide particles and/or magnesium hydroxide particles and the hydrotalcite compound particles are incorporated so that the (calcium hydroxide particles and/or magnesium hydroxide particles):(hydrotalcite compound particles) ratio becomes 2:8 to 9:1.

6. The filler for synthetic resin causing no foaming problem according to claim 5, wherein the calcium hydroxide particles and/or magnesium hydroxide particles and the hydrotalcite compound particles are incorporated so that the (calcium hydroxide particles and/or magnesium hydroxide particles):(hydrotalcite compound particles) ratio becomes 3:7 to 6:4.

7. The filler for synthetic resin causing no foaming problem according to any one of claims 3 to 6, wherein the hydrotalcite particles have been decrystallized at a temperature of 150 to 300°C.

8. The filler for synthetic resin causing no foaming problem according to any one of claims 3 to 6, wherein the hydrotalcite particles have been subjected to surface treatment using at least one surface treatment agent selected from the group consisting of a higher fatty acid, an anionic surfactant, a phosphoric ester, a coupling agent, and an ester of a polyhydric alcohol and a fatty acid.

9. The filler for synthetic resin causing no foaming problem according to any one of claims 3 to 6, wherein the hydrotalcite compound particles have on the surfaces thereof an acid-resistant coating of at least one member selected from the group consisting of a silicon compound, a boron compound, and an aluminum compound.

10. The filler for synthetic resin causing no foaming problem according to any one of claims 3 to 6, wherein the hydrotalcite compound particles have an average secondary particle diameter of 0.01 to 10 $\mu$m as measured by a laser diffraction scattering method.

11. A synthetic resin composition causing no foaming problem, **characterized in that** the composition is obtained by incorporating 0.01 to 80 parts by weight of the filler for synthetic resin causing no foaming problem according to any one of claims 6 to 10 into 100 parts by weight of a synthetic resin.

12. The synthetic resin composition according to claim 11, **characterized in that** 0.01 to 30 parts by weight of the filler is incorporated into 100 parts by weight of the synthetic resin.

13. The synthetic resin composition according to claim 11, **characterized in that** 10 to 80 parts by weight of the filler is incorporated into 100 parts by weight of the synthetic resin.

**EP 2 546 296 A1**

14. The synthetic resin composition according to claim 13, wherein the synthetic resin is polyvinyl chloride , so that the synthetic resin composition has excellent thermal stability.

15. The synthetic resin composition according to claim 13, wherein the synthetic resin is a polyolefin or a copolymer thereof, or a halogen-containing resin, so that the synthetic resin composition is flame-retardant.

16. A shaped article formed from the synthetic resin composition according to any one of claims 11 to 15.

17. A method for producing a synthetic resin composition, **characterized by** comprising incorporating into a synthetic resin, as a filler for synthetic resin causing no foaming problem, calcium hydroxide particles and/or magnesium hydroxide particles together with hydrotalcite compound particles represented by the following chemical structural formula (1):

$$[(Mg^{2+})_y(M_1^{2+})_{(1-y)}]_{1-x}M^{3+}_x(OH)_2CO_3^{2-}\bullet mH_2O \qquad \text{(Formula 1)}$$

wherein $M_1^{2+}$ represents a bivalent metal, $M^{3+}$ represents at least one trivalent metal, and x, y, and m represent valences satisfying the following relationships:

$$0 < x < 0.5,$$

$$0 < y \leq 1,$$

and

$$0 \leq m < 2.$$

18. The method for producing a synthetic resin composition according to claim 17, wherein the calcium hydroxide particles and/or magnesium hydroxide particles are calcium hydroxide particles having an average secondary particle diameter of 0.1 to 35 $\mu$m as measured by a laser diffraction scattering method and/or magnesium hydroxide particles having an average secondary particle diameter of 0.01 to 10 $\mu$m as measured by a laser diffraction scattering method.

19. The method for producing a synthetic resin composition according to claim 17, wherein the calcium hydroxide particles and/or magnesium hydroxide particles and the hydrotalcite compound particles are incorporated so that the (calcium hydroxide particles and/or magnesium hydroxide particles):(hydrotalcite compound particles) ratio becomes 2:8 to 9:1.

20. The method for producing a synthetic resin composition according to claim 17, wherein the calcium hydroxide particles and/or magnesium hydroxide particles and the hydrotalcite compound particles are incorporated so that the (calcium hydroxide particles and/or magnesium hydroxide particles):(hydrotalcite compound particles) ratio becomes 3:7 to 6:4.

21. The method for producing a synthetic resin composition according to claim 17, wherein the hydrotalcite particles have been decrystallized at a temperature of 150 to 300°C.

22. The method for producing a synthetic resin composition according to claim 17, wherein the hydrotalcite particles have been subjected to surface treatment using at least one surface treatment agent selected from the group consisting of a higher fatty acid, an anionic surfactant, a phosphoric ester, a coupling agent, and an ester of a polyhydric alcohol and a fatty acid.

23. The method for producing a synthetic resin composition according to claim 17, wherein the hydrotalcite compound particles have on the surfaces thereof an acid-resistant coating of at least one member selected from the group consisting of a silicon compound, a boron compound, and an aluminum compound.

24. The method for producing a synthetic resin composition according to claim 17, wherein the hydrotalcite compound

17

particles have an average secondary particle diameter of 0.01 to 10 $\mu$m as measured by a laser diffraction scattering method.

25. The method for producing a synthetic resin composition according to any one of claims 17 to 24, **characterized in that** 0.01 to 80 parts by weight of the filler for synthetic resin causing no foaming problem is incorporated into 100 parts by weight of the synthetic resin.

26. The method for producing a synthetic resin composition according to any one of claims 17 to 24, **characterized in that** 0.01 to 30 parts by weight of the filler for synthetic resin causing no foaming problem is incorporated into 100 parts by weight of the synthetic resin.

27. The method for producing a synthetic resin composition according to any one of claims 17 to 24, **characterized in that** 10 to 80 parts by weight of the filler for synthetic resin causing no foaming problem is incorporated into 100 parts by weight of the synthetic resin.

28. The method for producing a synthetic resin composition according to any one of claims 17 to 27, wherein the synthetic resin is polyvinyl chloride, so that the synthetic resin composition has excellent thermal stability.

29. The method for producing a synthetic resin composition according to any one of claims 17 to 27, wherein the synthetic resin is a polyolefin or a copolymer thereof, or a halogen-containing resin, so that the synthetic resin composition is flame-retardant.

## INTERNATIONAL SEARCH REPORT

| | International application No. |
|---|---|
| | PCT/JP2011/053239 |

**A. CLASSIFICATION OF SUBJECT MATTER**
*C08K3/26*(2006.01)i, *C01F7/00*(2006.01)i, *C01G9/00*(2006.01)i, *C08K3/22*
(2006.01)i, *C08K9/00*(2006.01)i, *C08L23/00*(2006.01)i, *C08L27/06*(2006.01)i,
*C08L101/00*(2006.01)i

According to International Patent Classification (IPC) or to both national classification and IPC

**B. FIELDS SEARCHED**

Minimum documentation searched (classification system followed by classification symbols)
C08K3/26, C01F7/00, C01G9/00, C08K3/22, C08K9/00, C08L23/00, C08L27/06,
C08L101/00

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2001-11268 A (Kyowa Chemical Industry Co., Ltd.),<br>16 January 2001 (16.01.2001),<br>claims; examples<br>& EP 1048689 A1 & CN 1271744 A | 1-29<br>7-9,21-23 |
| X<br>Y | JP 11-323048 A (Mizusawa Industrial Chemicals, Ltd.),<br>26 November 1999 (26.11.1999),<br>claims; examples<br>(Family: none) | 1-6,10-20,<br>24-29<br>7-9,21-23 |
| X<br>Y | JP 2003-138149 A (Sea Water Chemical Institute, Inc.),<br>14 May 2003 (14.05.2003),<br>claims; examples<br>(Family: none) | 1-7,10-21,<br>24-29<br>8,9,22,23 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>23 March, 2011 (23.03.11) | Date of mailing of the international search report<br>05 April, 2011 (05.04.11) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2011/053239

C (Continuation). DOCUMENTS CONSIDERED TO BE RELEVANT

| Category* | Citation of document, with indication, where appropriate, of the relevant passages | Relevant to claim No. |
|---|---|---|
| X | JP 2000-309671 A (Sea Water Chemical Institute, Inc.), | 1-6,8-20, 22-29 |
| Y | 07 November 2000 (07.11.2000), claims; examples (Family: none) | 7,21 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57080444 A
- JP 63046248 A
- JP 46002280 B
- US 3879525 A
- JP 50030039 B
- JP 48029477 B
- JP 51029129 B